# DEMANDE DE BREVET EUROPEEN

(11) **EP 4 274 186 A1**
(43) Date de publication de la demande: **08.11.2023**
(21) Numéro de dépôt: 23169674.1
(22) Date de dépôt: 25.04.2023
(51) Int. Cl.: H04L 51/02

(54) **PROCEDES ET DISPOSITIFS PERMETTANT UNE INTERACTION ENRICHIE ENTRE UN VEHICULE CONNECTE ET UN AGENT CONVERSATIONNEL**

(30) Priorité: 03.05.2022 FR 2204200
(71) Demandeur: Orange, 92130 Issy-les-Moulineaux (FR)
(72) Inventeur: LE HUEROU, Emmanuel, 92326 Chatillon (FR); TOUTAIN, François, 92326 Chatillon (FR)

(57) **Abrégé**

L'invention concerne un procédé de traitement d'au moins un message émis par un agent conversationnel, ledit message comprenant une pluralité de données, ledit procédé de traitement étant mis en oeuvre par un dispositif de traitement et caractérisé en ce qu'il comprend :
- une étape de réception dudit au moins un message ;
- une étape de détermination d'au moins une première donnée à vocaliser et d'au moins une deuxième donnée à afficher, lesdites données étant comprises dans ladite pluralité ;
- une étape de mise à disposition, pour restitution, de ladite au moins une première donnée et de ladite au moins une deuxième donnée.

## Description

### 1. Domaine de l'invention

L'invention se rapporte au domaine des télécommunications et concerne plus particulièrement les services numériques fournis à un utilisateur d'un véhicule.

### 2. Art Antérieur

On connaît le standard GSMA « Rich Communication Suite » (RCS) qui définit un protocole de messagerie enrichie, en évolution des services SMS et MMS des opérateurs de télécommunications. Le standard actuel (Universal Profile 2), via des communications "Application to People" (ou A2P), permet à un agent conversationnel (ou « chatbot » en anglais) d'interagir avec un utilisateur. Plus précisément, le protocole décrit un ensemble de formats de messages enrichis utilisables par un agent conversationnel pour présenter de l'information et des actions à l'utilisateur. Ces formats graphiques et/ou textuels ont été conçus pour faciliter le commerce conversationnel lorsque l'utilisateur est équipé d'un terminal adapté, par exemple un smartphone, et que son attention peut être entièrement tournée vers le service.

Cependant, dans un contexte de mobilité, par exemple lorsque l'utilisateur conduit un véhicule, de tels messages ne sont pas totalement adaptés. En effet, dans un tel contexte l'utilisateur dispose des interfaces de communication du véhicule qui peuvent être sensiblement différentes de celles d'un smartphone / tablette.

Il y a donc nécessité d'inventer de nouvelles modalités d'interaction entre un agent conversationnel et un véhicule qui soient adaptées à l'environnement proposé à bord du véhicule (interfaces de communication, ergonomie, etc.) et aux contraintes liées à la conduite.

### 3. Exposé de l'invention

L'invention concerne un procédé de traitement d'au moins un message émis par un agent conversationnel, ledit message comprenant une pluralité de données, ledit procédé de traitement étant mis en oeuvre par un dispositif de traitement et caractérisé en ce qu'il comprend :
- une étape de réception dudit au moins un message ;
- une étape de détermination d'au moins une première donnée à vocaliser et d'au moins une deuxième donnée à afficher, lesdites données étant comprises dans ladite pluralité ;
- une étape de mise à disposition, pour restitution, de ladite au moins une première donnée et de ladite au moins une deuxième donnée.

Avantageusement, ce procédé permet à un agent conversationnel d'interagir avec un utilisateur via une interface graphique mais également via une interface vocale. Concrètement, le procédé récupère un message en provenance d'un agent conversationnel puis le traite afin d'obtenir au moins une donnée à vocaliser et au moins une donnée à restituer visuellement à l'utilisateur. Ainsi, lorsque le regard de l'utilisateur est occupé, par exemple à regarder la route dans un contexte de conduite, l'utilisateur peut, via la vocalisation, obtenir des informations complémentaires (première donnée) lui permettant d'optimiser le dialogue avec l'agent conversationnel.

A noter que les données contenues dans le message peuvent être des données à restituer à la fois vocalement et graphiquement.

A noter également que l'étape de détermination peut comprendre une première étape d'analyse du message reçu (c'est-à-dire une analyse des données comprises dans le message mais aussi une analyse de la structure du message) puis une étape de détermination des données contenues dans le message comme étant à vocaliser et/ou à afficher.

On entend par agent conversationnel un automate informatique de dialogue apte à dialoguer avec un utilisateur et/ou un objet connecté. L'agent conversationnel génère des messages à destination de l'utilisateur/ objet connecté et interprète les réponses émises en retour afin de répondre aux demandes / besoins du client.

On entend par message un ensemble de données destinées à être transmises par un système informatique. Le message peut être, textuel sous forme d'un flux de donnée ou d'un/de fichiers.

Selon un mode de mise en oeuvre particulier de l'invention, un procédé tel que décrit ci-dessus est caractérisé en ce que les étapes de détermination et de mise à disposition sont conditionnées au résultat d'une étape de détection du type dudit au moins un message reçu.

Avantageusement, ce mode de mise en oeuvre permet de ne pas mettre en oeuvre la totalité du procédé lorsque le message reçu en provenance de l'agent conversationnel n'est pas adapté. Par exemple, lorsque le message reçu est au format XML (Extensible Markup Language) le procédé peut traiter le message afin de vérifier la présence d'une balise particulière lui indiquant le type de contenu du message. Ainsi, la mise en oeuvre des étapes de détermination et de mise à disposition est fonction de la présence ou non d'une telle balise et/ou de son contenu.

Par exemple, pour un contenu de type RCS (pour Rich Communication Suite), on peut citer les balises « rich card », « suggested action », « suggested reply », « media, text », « calendar event », « suggested chip list », etc.

Alternativement et ou cumulativement, l'étape de détection peut correspondre à la détection de l'extension d'un fichier reçu, c'est-à-dire de l'extension du message reçu en provenance de l'agent conversationnel. Ainsi, la mise en oeuvre des étapes de détermination et de mise à disposition est fonction du type d'extension (par exemple « .xml », « .json », « .exe », etc.) du fichier reçu.

Selon un mode de mise en oeuvre particulier de l'invention, un procédé tel que décrit ci-dessus est caractérisé en ce que l'étape de détermination comprend une étape de détection du type desdites données comprises dans ledit message.

Avantageusement, ce mode de mise en oeuvre permet de déterminer si une donnée est à vocaliser (première donnée) et/ou à afficher (deuxième donnée) en fonction de la nature de la donnée. Par exemple, lorsque le message reçu en provenance de l'agent conversationnel est au format XML (Extensible Markup Language) le procédé peut traiter le message afin de détecter la présence d'une balise particulière lui indiquant le type/la nature de la donnée associée à la balise. Par exemple, pour un contenu de type RCS, on peut citer la balise « suggested replies ».

Alternativement et ou cumulativement, la détection peut se faire en fonction de la nature de la donnée elle-même. Par exemple, si la donnée est un exécutable, le procédé peut en déduire que la donnée n'est pas une donnée à vocaliser et à afficher.

Selon un mode de mise en oeuvre particulier de l'invention, un procédé tel que décrit ci-dessus est caractérisé en ce que l'étape de mise à disposition est suivie d'une étape de restitution desdites au moins une première et au moins une deuxième données.

Avantageusement, ce mode de mise en oeuvre permet de restituer à un utilisateur les données déterminées comme à afficher et à vocaliser. Bien évidemment, dans ce cas de figure le dispositif de traitement doit être apte à restituer vocalement et visuellement les données.

Selon un mode de mise en oeuvre particulier de l'invention, un procédé tel que décrit ci-dessus est caractérisé en ce que l'étape de restitution est suivie d'une étape d'obtention d'au moins une troisième donnée dite de réponse d'un utilisateur.

Avantageusement, ce mode de mise en oeuvre permet d'obtenir une réponse au message reçu de la part de l'utilisateur. Cette réponse est par exemple obtenue via une commande vocale et/ou un évènement en provenance d'un périphérique d'entrée/sortie tel qu'un bouton, une molette, un appui sur un écran tactile, etc.

Selon un mode de mise en oeuvre particulier de l'invention, un procédé tel que décrit ci-dessus est caractérisé en ce que l'étape de mise à disposition comprend en outre la fourniture d'au moins une quatrième donnée apte à être vocalisée, ladite quatrième donnée étant déterminée en fonction de ladite pluralité de données, et en ce que l'étape de restitution comprend en outre la restitution de ladite quatrième donnée.

Avantageusement, ce mode de mise en oeuvre permet de compléter contextuellement la vocalisation de certaines données par des éléments (quatrième donnée) générées en fonction des données contenues dans le message reçu. Ces données sont par exemple des « intentions » construites en fonction de l'analyse de la structure du message et/ou de données préalablement restituées et/ou à restituer à l'utilisateur par le dispositif de traitement. Par exemple, une « intention » peut être une commande vocale que l'utilisateur est susceptible d'énoncer et que le procédé de traitement doit pouvoir interpréter.

Selon un mode de mise en oeuvre particulier de l'invention, un procédé tel que décrit ci-dessus est caractérisé en ce que ladite quatrième donnée est déterminée en fonction de ladite au moins une première donnée et/ou de ladite au moins une deuxième donnée.

Avantageusement, ce mode de mise en oeuvre permet de compléter contextuellement la vocalisation de certaines données par des éléments (quatrième donnée) générées en fonction des données déterminées comme étant à afficher et/ou à vocaliser.

Par exemple, le procédé peut analyser le message reçu en provenance de l'agent conversationnel et déterminer qu'une donnée à vocaliser correspond au premier choix d'une liste de choix à restituer à l'utilisateur. Dans ce cas, le procédé peut ajouter un élément à vocaliser tel que le texte « choix 1 ».

L'invention concerne également un dispositif de traitement d'au moins un message émis par un agent conversationnel, ledit message comprenant une pluralité de données, caractérisé en ce que le dispositif comprend :
- un module de réception dudit au moins un message ;
- un module de détermination d'au moins une première donnée à vocaliser et d'au moins une deuxième donnée à afficher, lesdites données étant comprises dans ladite pluralité ;
- un module de mise à disposition, pour restitution, de ladite au moins une première donnée et de ladite au moins une deuxième donnée.

A noter que le dispositif de traitement peut être un dispositif distribué. Les modules peuvent donc être répartis sur plusieurs machines telles que des terminaux, des serveurs, etc. et communiquer entre eux au travers d'un réseau de communication comme le réseau Internet.

L'invention propose également un procédé de transmission d'au moins une information relative à un service conversationnel, ledit procédé étant mis en oeuvre par un agent conversationnel et caractérisé en ce qu'il comprend :
- une étape de création d'un message comprenant au moins une première donnée identifiée comme étant à restituer visuellement et au moins une deuxième donnée identifiée comme étant à restituer vocalement ;
- une étape d'émission dudit message à destination d'un dispositif de traitement.

Avantageusement, ce procédé permet à un agent conversationnel de générer des messages qui comprennent à la fois des données identifiées comme étant à restituer vocalement et des données identifiées comme étant à restituer visuellement.

Ainsi, le procédé permet, dans le cas d'une communication entre un agent conversationnel et un véhicule, d'apporter au conducteur des fonctionnalités vocales en complément de la présentation visuelle d'éléments proposés par l'agent conversationnel.

L'invention propose en outre un dispositif de transmission d'au moins une information relative à un service conversationnel caractérisé en ce que le dispositif comprend :
- un module de création d'un message comprenant au moins une première donnée apte à être restituée visuellement et au moins une deuxième donnée apte à être restituée vocalement ;
- un module d'émission dudit message à destination d'un dispositif de traitement.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

L'invention concerne également des programmes d'ordinateur comportant des instructions pour la mise en oeuvre des procédés ci-dessus selon l'un quelconque des modes particuliers de réalisation décrits précédemment, lorsque lesdits programmes sont exécutés par un processeur. Les procédés peuvent être mis en oeuvre de diverses manières, notamment sous forme câblée ou sous forme logicielle. Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel un programme est incorporé, le circuit étant adapté pour exécuter ou pour être utilisé dans l'exécution du procédé en question.

Ce dispositif de transmission, ce dispositif de traitement et ces programmes d'ordinateur présentent des caractéristiques et avantages analogues à ceux décrits précédemment en relation avec le procédé de transmission et le procédé de traitement.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 illustre un exemple d'environnement de mise en oeuvre de l'invention selon un mode particulier de réalisation de l'invention ;
[Fig 2] La figure 2 illustre de manière schématique un exemple d'architecture d'un dispositif adapté pour la mise en oeuvre du procédé de traitement selon un mode de réalisation particulier de l'invention ;
[Fig 3] La figure 3 illustre les principales étapes du procédé de traitement selon un mode de réalisation particulier de l'invention ;
[Fig 4] La figure 4 illustre les principales étapes du procédé de transmission selon un mode de réalisation particulier de l'invention ;
[Fig 5] La figure 5 illustre de manière schématique un exemple d'architecture d'un dispositif adapté pour la mise en oeuvre du procédé de transmission selon un mode de réalisation particulier de l'invention.

### 5. Description d'un mode de réalisation de l'invention

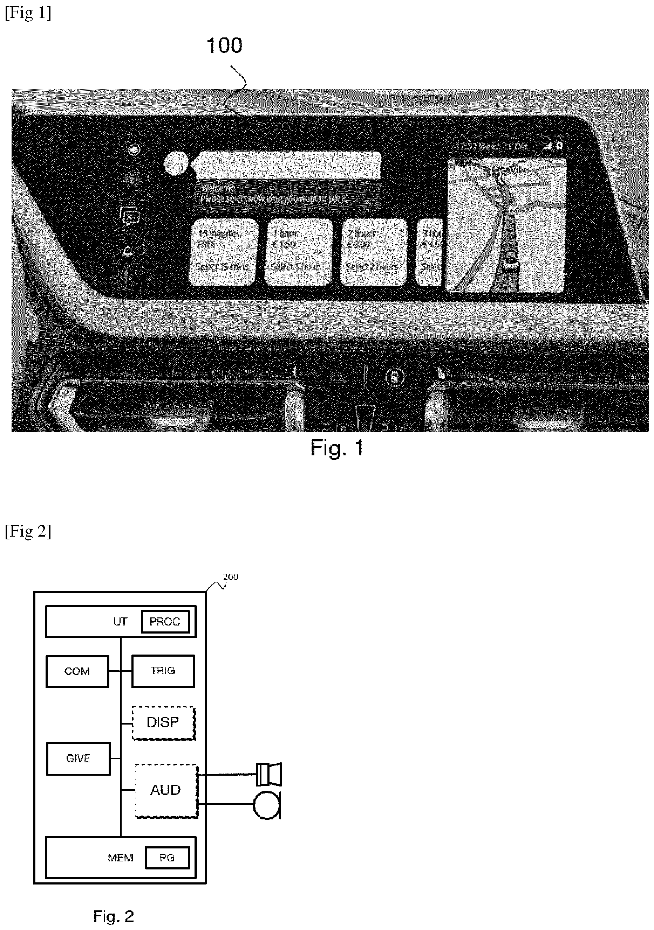

La figure 1 illustre un exemple d'environnement de mise en oeuvre de l'invention selon un mode particulier de réalisation de l'invention. La figure 1 illustre plus particulièrement un terminal 100 apte à mettre en oeuvre le procédé de traitement selon un mode particulier de réalisation. Il convient de noter ici que, bien que le terminal 100 illustré sur la figure 1 correspond ici à un terminal de type « ordinateur de bord » d'une voiture, l'invention peut s'appliquer à tout type de terminal disposant d'un écran et d'un module audio incluant par exemple un haut-parleur et/ou un microphone, comme par exemple, et de façon non limitative, une tablette, une liseuse électronique, une console de jeux, une télévision, un distributeur automatique de billets, des terminaux/objets connectés ou encore un ordinateur personnel.

Dans l'exemple décrit à l'appui de la figure 1, le terminal 100 est un ordinateur de bord d'une voiture possédant un écran tactile et un module audio adapté pour interagir visuellement et vocalement avec un utilisateur présent dans l'habitacle du véhicule. De manière classique, l'utilisateur du terminal 100 peut commander l'exécution d'une opération en effectuant une action sur une zone de l'écran du terminal 100. Pour cela, le terminal interprète l'action de l'utilisateur en fonction de ce qui est affiché à l'écran et plus particulièrement à l'emplacement où est effectuée l'action. L'action peut par exemple être un appui (un contact bref réalisé sur l'écran) un double appui, un appui long, un glisser/déposer, un geste réalisé au contact de l'écran représentant par exemple une signature ou toute autre action impliquant un contact avec l'écran.

De même, l'utilisateur peut commander l'exécution d'une opération via une commande vocale. Pour cela, le terminal 100 interprète (reconnaissance vocale) la commande en fonction du contexte et/ou des éléments préalablement vocalisés.

Dans l'exemple décrit à l'appui de la figure 1, le terminal 100 communique avec un agent conversationnel (non représenté) et obtient un message comprenant des données à afficher et à vocaliser. La communication peut être filaire, par exemple via CPL (Courant Porteur en Ligne) lors du rechargement de la batterie du véhicule lorsque celui-ci est un véhicule électrique ou bien sans fil via par exemple les technologies Bluetooth^{®}, WiFi^{®} et/ou de radiotéléphonie cellulaire.

Dans cet exemple l'agent conversationnel est un service fourni par un gestionnaire de parking. L'agent conversationnel réalise par exemple l'encaissement des frais de parking. Les données comprises dans le message peuvent correspondre à :
- une image telle que le logo de l'entreprise gestionnaire du parking (non représenté) ;
- un texte d'accueil avec une invitation à choisir la durée de séjour ;
- une collection de réponses possibles qui présentent la gamme des durées acceptées et leur prix associé.

A noter que le message reçu en provenance de l'agent conversationnel peut être affiché sur l'écran du véhicule, en substitution du contenu précédent (fréquence radio, titre de musique, carte de navigation routière, etc.).

Selon un mode de réalisation particulier, un signal sonore est joué/restitué pour prévenir de l'arrivée du message.

Selon un mode de réalisation particulier, l'utilisateur est seulement prévenu de l'arrivée du message, et une action de sa part est requise pour déclencher l'affichage.

Par la suite, l'utilisateur peut opérer son choix en sélectionnant du doigt la zone de l'écran tactile qui correspond à son besoin ou bien en utilisant une « molette » (commodo du véhicule) pour se déplacer dans l'interface graphique et sélectionner l'élément graphique qui l'intéresse.

Cumulativement, le terminal 100 analyse le message reçu afin d'en déterminer les éléments à vocaliser.

La figure 2 illustre un dispositif 200 configuré pour mettre en oeuvre le procédé de traitement selon un mode particulier de réalisation.

Selon un mode particulier de réalisation de l'invention, le dispositif 200 a l'architecture classique d'un ordinateur (ordinateur de bord d'un véhicule), et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en oeuvre les étapes du procédé de traitement tel que décrit précédemment, lorsque le programme est exécuté par le processeur PROC.

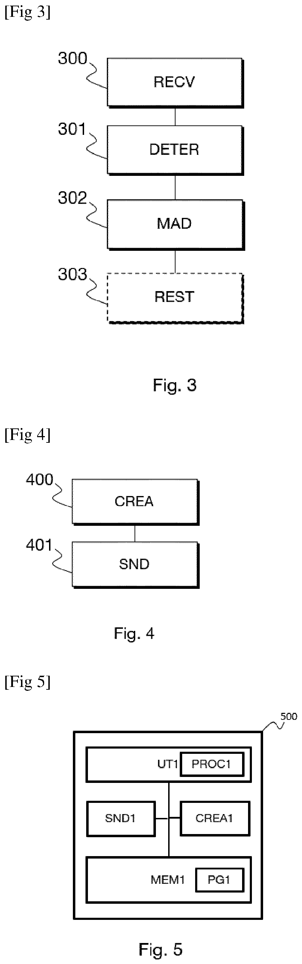

A l'initialisation, les instructions de code du programme d'ordinateur PG sont par exemple chargées dans une mémoire avant d'être exécutées par le processeur PROC. Le processeur PROC de l'unité de traitement UT met notamment en oeuvre les étapes du procédé de traitement selon l'un quelconque des modes particuliers de réalisation décrits en relation avec les figures 1 et 3, selon les instructions du programme d'ordinateur PG.

Le dispositif 200 comprend un module COM configuré pour établir des communications avec un réseau par exemple IP et/ou circuit. Ce module peut être utilisé pour communiquer (émettre et recevoir des messages) avec un agent conversationnel par exemple lorsqu'il se trouve à proximité.

Le dispositif 200 comprend également un module TRIG apte à déterminer, dans un message obtenu via le module COM en provenance d'un agent conversationnel, les données à vocaliser et à restituer visuellement à un utilisateur.

Le dispositif 200 comprend en outre un module GIVE apte à mettre à disposition les données à vocaliser et à restituer visuellement à un utilisateur. La mise à disposition peut être réalisée via le réseau. Le procédé émet alors à destination d'un terminal (par exemple un smartphone de l'utilisateur) ou d'un serveur les données à vocaliser et à restituer visuellement.

Selon un mode de réalisation particulier, le module GIVE et le module COM sont un seul et même module.

Alternativement et/ou cumulativement, la mise à disposition peut en être réalisée localement. Le dispositif 200 peut par exemple comprendre un module d'affichage (DISP) adapté pour afficher les données déterminées par le module TRIG comme étant à restituer visuellement. Le dispositif peut en outre comprendre un module AUD apte à restituer grâce à des sons, via par exemple un haut-parleur, les données du message déterminées comme étant à vocaliser.

Selon un mode de réalisation particulier, le module AUD comprend un module de reconnaissance vocale apte à interpréter des commandes vocales énoncées par un utilisateur et captées par exemple via un microphone puis à déclencher une action associée en fonction de la commande vocale énoncée.

Selon un mode de réalisation particulier, le module GIVE et le module AUD sont un seul et même module.

Selon un mode de réalisation particulier, le module GIVE et le module DISP sont un seul et même module.

La figure 3 illustre des étapes du procédé de traitement selon l'un des modes particuliers de réalisation de l'invention présentés précédemment, le procédé étant exécuté sur le terminal 100 décrit à la figure 1.

Lors d'une première étape 300, le véhicule qui intègre le terminal 100 rentre dans une zone de parking. Le procédé reçoit alors un message en provenance d'un agent conversationnel d'un gestionnaire de parking. Le message comprend une pluralité de données à vocaliser et à afficher à l'attention d'un utilisateur présent dans l'habitacle du véhicule.

A l'étape 301, le message est analysé par le procédé. Concrètement le procédé traite / parcourt la structure du message (par exemple une arborescence XML ou JSON) et détermine les données à vocaliser et/ou à afficher.

La vocalisation est un procédé connu et utilisé le plus souvent pour répondre à des besoins d'accessibilité. L'inconvénient d'un tel procédé est une mauvaise expérience utilisateur, lorsque celui-ci entreprend de décrire l'intégralité d'un document électronique incluant par exemple des images. Dans le cas décrit à l'appui de la figure 1 le besoin est différent. En effet il ne s'agit pas de vocaliser l'ensemble du message, mais de déterminer les sous-ensembles pertinents à vocaliser.

L'idée est de compléter la présentation visuelle par une description adaptée du message reçu via une synthèse vocale. Ainsi, même si l'attention visuelle du conducteur est occupée par sa conduite, il peut tout de même prendre connaissance du message fourni par l'agent conversationnel.

Dans le cas du message décrit à l'appui de la figure 1, le procédé peut déterminer :
- qu'il n'y a pas de traitement particulier à prévoir concernant le logo /image, c'est-à-dire pas de vocalisation ;
- que le texte d'accueil est une donnée à vocaliser et/ou à afficher ;
- que la collection/liste de réponses/choix possibles (15 minutes (101a), une heure (101b), deux heures (101c), etc.) sont également des données à vocaliser et/ou à afficher.

Le procédé peut déterminer les données à vocaliser et à afficher en fonction de la nature de la donnée. Par exemple, lorsque la donnée correspond à du texte, le procédé peut considérer que la donnée est à vocaliser. De même, si la donnée est une image, le procédé peut considérer que cette donnée est à afficher uniquement.

Selon un mode de réalisation particulier, le procédé peut s'arrêter lorsqu'il détecte que le message n'a pas le bon format. En effet, si le message est un message/fichier exécutable, le procédé peut considérer que les données comprises dans le message ne sont ni à vocaliser ni à afficher.

Selon un mode de réalisation particulier, le procédé peut également ajouter des éléments à vocaliser en plus des données à vocaliser comprises dans le message reçu. Par exemple, lorsque le procédé détecte la présence d'une liste de choix dans le message, il peut ajouter le texte « veuillez choisir » ou bien un texte « choix X », X étant la position du choix dans la liste de choix. Bien évidemment, l'ajout de tels éléments à vocaliser est réalisé de façon à ce que la restitution soit intelligible de l'utilisateur. Par exemple le texte « veuillez choisir » est ajouté juste avant la liste de choix.

Selon un mode de réalisation particulier, une donnée relative à un ordre de passage pour la vocalisation est associée à chaque donnée et/ou élément à vocaliser.

Le procédé peut également déterminer et/ou générer des « intentions » en fonction du contenu du message. On appelle « intention » une commande vocale que l'utilisateur est susceptible d'énoncer et que le procédé de traitement doit pouvoir interpréter. Par exemple, lorsqu'un texte est vocalisé, une intention est générée permettant de réitérer la vocalisation du texte lorsque l'utilisateur le demande. Concrètement, lorsque l'utilisateur prononce la commande vocale « répéter » (intention générée) le texte est à nouveau vocalisé. De même, une intention « quels sont les choix » peut être générée par le procédé afin de permettre la vocalisation de la liste de choix.

A noter que la construction de ces intentions peut faire appel à des inférences évoluées, par exemple pour prendre en compte un énoncé "un quart d'heure" comme pertinent pour le choix « 15 minutes » (101a).

Lors de l'étape 302 le procédé met à disposition les données déterminées comme étant à vocaliser et/ou à afficher. Ces données sont ensuite traitées par un dispositif d'affichage et une synthèse / reconnaissance vocale (étape 303).

La restitution est réalisée de façon adaptée afin que le conducteur et/ou les passagers puissent prendre connaissance du message et des choix de réponses suggérés de manière fluide et en toute sécurité.

Une fois la restitution des données réalisée, l'utilisateur a la possibilité d'interagir avec le terminal 100 via l'écran tactile et/ou les micros situés dans l'habitacle du véhicule (donnée de réponse au sens de l'invention).

A noter que les véhicules récents sont généralement équipés d'un système informatique qui est souvent pourvu de modalités de dialogue vocal : capteurs sonores bien disposés dans l'habitacle, avec système de capture du son optimisé pour réduire les bruits parasites, module de reconnaissance de la parole, module de synthèse de la parole, équipement de restitution sonore, bouton de déclenchement au volant. Classiquement, le système d'exploitation du véhicule utilise ces moyens pour permettre à l'utilisateur d'interagir avec les différents services à bord. Le module de reconnaissance de la parole peut être adossé à un système NLP (Natural Language Processing) capable de classifier un contenu reconnu pour lui assigner une intention.

Lors de l'étape 302 le procédé peut également fournir les intentions associées au message reçu. Cela permet au dispositif/module de synthèse vocale et au dispositif de reconnaissance vocale une interaction plus fluide avec l'utilisateur. En effet, les actions possibles (commandes vocales) de l'utilisateur étant déjà déterminées, leur interprétation est plus rapide.

Selon un mode de réalisation particulier, le procédé utilise une voix de synthèse qui est différente de celle utilisée habituellement dans le véhicule, afin que les utilisateurs identifient l'agent conversationnel à un service différent de ceux utilisés habituellement à bord.

Selon un mode de réalisation particulier, le message reçu lors de l'étape 300 est un message structuré utilisant un langage de balisage (par exemple XML, HTML, etc.). Le message inclut une ou plusieurs balises particulières dont le contenu associé est identifié comme étant à vocaliser.

Selon un mode de réalisation particulier, le message reçu lors de l'étape 300 est un message structuré utilisant un langage de balisage (par exemple XML, HTML, etc.). Le message inclut une ou plusieurs balises particulières dont le contenu associé est identifié comme étant une ou plusieurs intentions.

Corrélativement au procédé de traitement, l'invention propose un procédé de transmission exécuté par un dispositif apte à mettre en oeuvre un agent conversationnel. Ce dispositif peut par exemple être, et de façon non limitative, une tablette, un écran connecté, un distributeur automatique de billets, des terminaux/objets connectés, un serveur et/ou un ordinateur.

La figure 4 illustre des étapes du procédé de transmission selon un mode particulier de réalisation de l'invention.

A l'étape 400, le procédé de transmission génère un message comprenant des données à vocaliser et des données à afficher.

Selon un mode de réalisation particulier, le message inclut une ou plusieurs balises particulières dont le contenu associé est identifié comme étant à vocaliser et/ou à afficher. Selon un mode de réalisation particulier, le message inclut une ou plusieurs balises particulières dont le contenu associé est identifié comme étant une ou plusieurs intentions. Une fois le message créé, le procédé de transmission émet le message à destination d'un dispositif de traitement tel qu'un ordinateur de bord d'une voiture connectée.

La figure 5 illustre un dispositif 500 configuré pour mettre en oeuvre le procédé de transmission selon un mode particulier de réalisation.

Selon un mode particulier de réalisation de l'invention, le dispositif 500 a l'architecture classique d'un ordinateur (agent conversationnel), et comprend notamment une mémoire MEM1, une unité de traitement UT1, équipée par exemple d'un processeur PROC1, et pilotée par le programme d'ordinateur PG1 stocké en mémoire MEM1. Le programme d'ordinateur PG1 comprend des instructions pour mettre en oeuvre les étapes du procédé de traitement tel que décrit précédemment, lorsque le programme est exécuté par le processeur PROC1.

A l'initialisation, les instructions de code du programme d'ordinateur PG1 sont par exemple chargées dans une mémoire avant d'être exécutées par le processeur PROC1. Le processeur PROC1 de l'unité de traitement UT1 met notamment en oeuvre les étapes du procédé de transmission selon l'un quelconque des modes particuliers de réalisation décrits en relation avec les figures 1 à 4, selon les instructions du programme d'ordinateur PG1.

Le dispositif 500 comprend un module CREA apte à générer des messages comprenant des données à vocaliser et des données à afficher. Le message utilise par exemple un langage structuré tel que le XML ou le JSON.

Le dispositif 500 comprend en outre un module SND configuré pour établir des communications avec un réseau par exemple IP et/ou circuit. Ce module peut être utilisé pour communiquer avec un ordinateur de bord d'un véhicule lorsque le dispositif se trouve à proximité de celui-ci (envoi d'un message généré par le module CREA à destination du véhicule).

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

Par exemple, l'invention peut s'appliquer également à un service de recharge de batterie d'un véhicule électrique. Concrètement, lorsque le véhicule est connecté électriquement à une borne de recharge électrique, l'agent conversationnel exécuté au niveau de la borne émet un message à destination du tableau de bord du véhicule via par exemple la technologie CPL. Le message émis peut comprendre des informations à vocaliser et/ou à afficher telles que des tarifs associés à des choix de temps de recharge, un texte d'accueil, etc. Une fois le message reçu par le tableau de bord du véhicule, le procédé de traitement détermine les informations à vocaliser et les informations à restituer visuellement. L'utilisateur présent dans l'habitacle du véhicule a ainsi la possibilité de choisir les modalités de rechargement et de paiement sans avoir à sortir du véhicule.

## Revendications

1. Procédé de traitement d'au moins un message émis par un agent conversationnel, ledit message comprenant une pluralité de données, ledit procédé de traitement étant mis en oeuvre par un dispositif de traitement (100) et **caractérisé en ce qu'**il comprend :
- une étape de réception (300) dudit au moins un message ;
- une étape de détermination (301) d'au moins une première donnée à vocaliser et d'au moins une deuxième donnée à afficher, lesdites données étant comprises dans ladite pluralité ;
- une étape de mise à disposition (302), pour restitution, de ladite au moins une première donnée et de ladite au moins une deuxième donnée.

2. Procédé selon la revendication 1 **caractérisé en ce que** les étapes de détermination et de mise à disposition sont conditionnées au résultat d'une étape de détection du type dudit au moins un message reçu.

3. Procédé selon la revendication 1 **caractérisé en ce que** l'étape de détermination comprend une étape de détection du type desdites données comprises dans ledit message.

4. Procédé selon la revendication 1 **caractérisé en ce que** l'étape de mise à disposition est suivie d'une étape de restitution (303) desdites au moins une première et au moins une deuxième données.

5. Procédé selon la revendication 1 **caractérisé en ce que** l'étape de restitution est suivie d'une étape d'obtention d'au moins une troisième donnée dite de réponse d'un utilisateur.

6. Procédé selon la revendication 4 **caractérisé en ce que** l'étape de mise à disposition comprend en outre la fourniture d'au moins une quatrième donnée apte à être vocalisée, ladite quatrième donnée étant déterminée en fonction de ladite pluralité de données, et **en ce que** l'étape de restitution comprend en outre la restitution de ladite quatrième donnée.

7. Procédé selon la revendication 6 **caractérisé en ce que** ladite quatrième donnée est déterminée en fonction de ladite au moins une première donnée et/ou de ladite au moins une deuxième donnée.

8. Dispositif de traitement d'au moins un message émis par un agent conversationnel, ledit message comprenant une pluralité de données, **caractérisé en ce que** le dispositif comprend :
- un module de réception (COM) dudit au moins un message ;
- un module de détermination (TRIG) d'au moins une première donnée à vocaliser et d'au moins une deuxième donnée à afficher, lesdites données étant comprises dans ladite pluralité ;
- un module de mise à disposition (GIVE), pour restitution, de ladite au moins une première donnée et de ladite au moins une deuxième donnée.

9. Procédé de transmission d'au moins une information relative à un service conversationnel, ledit procédé étant mis en oeuvre par un agent conversationnel et **caractérisé en ce qu'**il comprend :
- une étape de création d'un message (400) comprenant au moins une première donnée identifiée comme étant à restituer visuellement et au moins une deuxième donnée identifiée comme étant à restituer vocalement ;
- une étape d'émission (401) dudit message à destination d'un dispositif de traitement.

10. Dispositif de transmission d'au moins une information relative à un service conversationnel **caractérisé en ce que** le dispositif comprend :
- un module de création (CREA1) d'un message comprenant au moins une première donnée apte à être restituée visuellement et au moins une deuxième donnée apte à être restituée vocalement ;
- un module d'émission (SND1) dudit message à destination d'un dispositif de traitement.

11. Programme d'ordinateur comportant des instructions pour la mise en oeuvre du procédé de traitement selon l'une quelconque des revendications 1 à 7, lorsque le programme est exécuté par un processeur.
